# EUROPEAN PATENT APPLICATION

(11) **EP 0 868 010 A1**
(43) Date of publication of application: **30.09.1998**
(21) Application number: 97830152.1
(22) Date of filing: 28.03.1997
(51) Int. Cl.: H02K 7/14, H02K 5/167, F04D 25/08

(54) **Fan motor for an electric convector**

(71) Applicant: RPM S.p.A., 45021 Badia Polesine (Rovigo) (IT)
(72) Inventor: D'Andrea, Giovanni, I-45021 Badia Polesine - Rovigo (IT)
(74) Representative: Ferreccio, Rinaldo

(57) **Abstract**

A fan (3) motor (5, 5') for an electric convector (1) for air conditioning, that is distinguished by unusually quiet operation especially at low speeds of rotation, comprises a hollow drive shaft (7) that carries one or more rotary fans (3) and projects from the hub (6) of the motor (5, 5') in an approximately horizontal position.

## Description

The present invention relates to a fan motor for an electric convector for air conditioning, as specified in the preamble of the appended Claim 1.

Modern electric convectors contain electric motors that are run at different speeds of rotation in order to optimize the speed at which the conditioned air is expelled for achieving the requisite environmental parameters, such as temperature and relative humidity.

An essential requirement of these electric convectors is that they run as silently as possible in order to avoid unpleasant noise pollution in the air-conditioned environment.

One critical point is the drive motor used in the convector. The problem is the shaft or shafts projecting from the corresponding hubs in a horizontal position, which can be very long and carry the weight, sometimes considerable, of the fans.

As a result the shaft is under a considerable bending load concentrated at its hub. This load is the cause of unwanted noise, especially at low speeds of rotation.

In addition, the moment of inertia of the fan greatly increases the limiting static friction which has to be overcome when the motor is first started. The so-called start-up torque required is much greater than that actually required to keep the fan turning once in motion.

This additional aspect contributes to the emission of noise when the motor is started, as well as demanding considerable structural complexity in the construction of the motor.

The technical problem that lies behind the present invention is the devising of a fan motor that overcomes the problems cited with reference to the prior art, and at the same time satisfies the abovementioned requirement.

This problem is solved by a fan motor in which the abovementioned drive shaft is hollow.

The fan motor according to the invention is distinguished by unusually quiet operation even at start-up, and, more generally, at low speeds of rotation.

Advantageously this motor allows the use of lubricated brasses instead of ball bearings which are inherently more noisy.

Other features and advantages of the fan motor according to the invention will be clear from the description of two preferred embodiments thereof provided by way of non-restrictive indication with reference to the accompanying drawings, in which:
* Figure 1 is a perspective view in partial section of a portion of an electric convector incorporating the fan motor according to the invention;
* Figure 2 is a side view of another version of the fan motor according to the invention;
* Figure 3 is a sectional perspective view of a detail of a motor as shown in Figure 1 or 2.

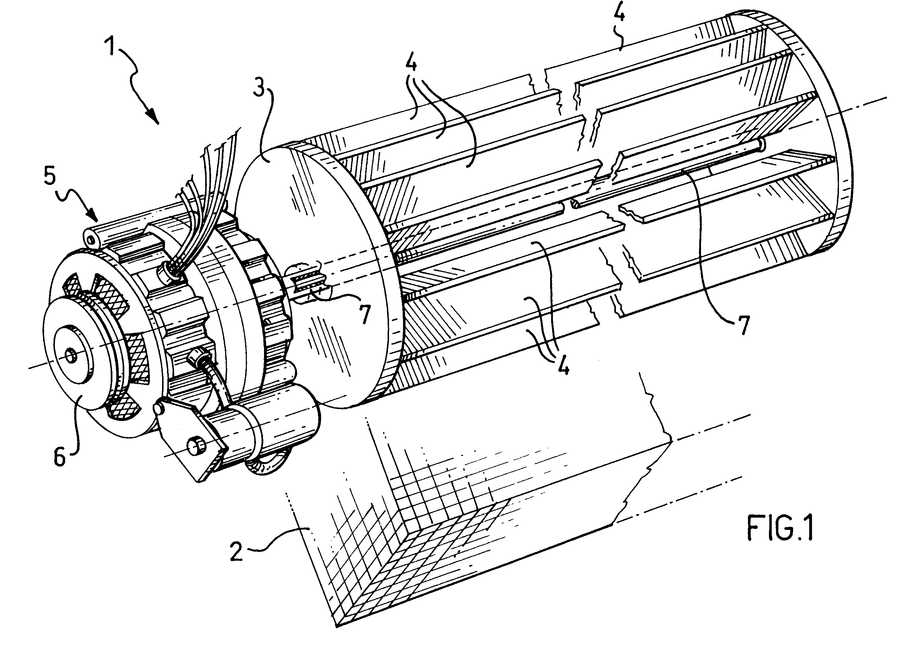

In Figure 1 an electric convector, for summer and/or winter air conditioning, is partly illustrated and marked 1. It comprises a conditioning unit 2 beneath a revolving fan 3 of the type in which the length is basically horizontal and the shape cylindrical, and comprising a plurality of longitudinal blades 4 parallel to the generatrices of the cylinder.

The function of the fan 3 is to force the thermal convection of air passing through the conditioning unit 2 and blow the air into the environment in question through an outlet (not shown).

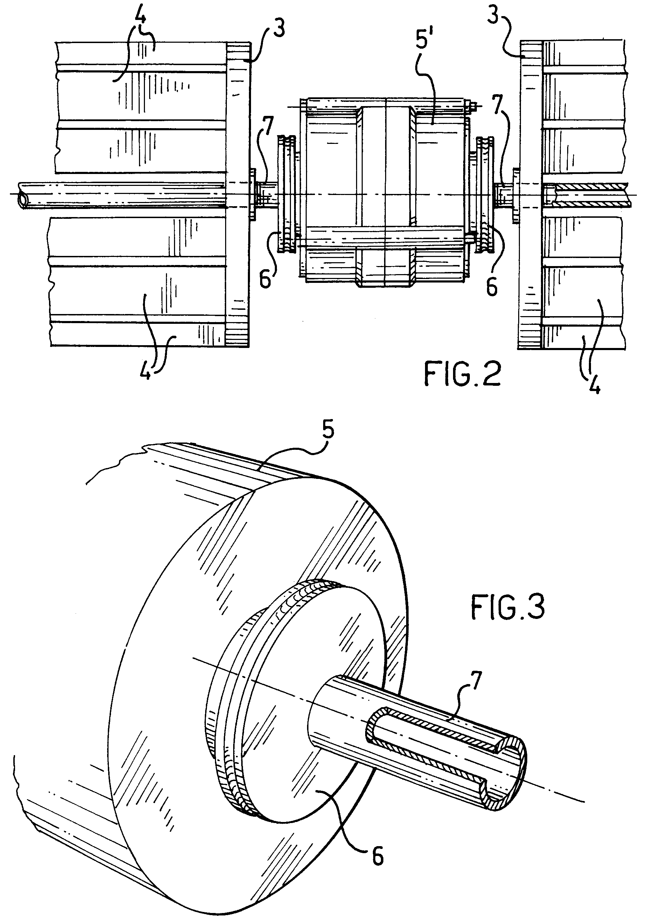

The electric convector 1 comprises an electric motor bearing the general reference 5, which has a hub 6 (Figure 3) and a straight drive shaft 7 projecting from the hub 6 and lying in an approximately horizontal position.

The drive shaft 7 carries said revolving fan 3 which is caused to turn by the motor in response to the manual and/or automatic controls referring to the conditioning of the environment.

The fan 3, in the present example of an embodiment, is fixed at its ends and its total weight is therefore borne, for the purposes of the moment of force produced by the fan 3 on the hub 6, at an intermediate point between the ends.

The shaft 7 is hollow and consists of a metal tube of specified length, capable of supporting the entire fan, which projects from said hub 6 and has a diameter of half an inch (12.7 mm).

Advantageously, the fill ratio, meaning the ratio of the volume of the solid part of the tube to its overall volume, is less than 75%. This ratio offers an excellent compromise between reducing the weight of the shaft and its bending stiffness.

Preferably, the hub 6 is of the type on which a damping spring ring (not shown) is mounted.

Said hub comprises an internal mechanical support with self-lubricating and self-aligning bushes carrying the total weight of shaft 7 and fan 3.

Figure 2 shows a fan motor 5' according to the invention comprising two hubs 6, one on either side, having coinciding axes of rotation and both connected to a single rotor of the electric motor.

The motor 5' comprises, projecting horizontally from each hub 6, two hollow shafts 7, each consisting of a metal tube on which a revolving fan 3 is mounted.

Once again the tube advantageously has a fill ratio of less than 75% and is mounted on its own self-lubricated and self-aligned bush.

The fan motors described above not only provide the advantages described earlier but also enable a substantial reduction in the vibrations generated during rotation, greater structural simplicity of the electric motor and lower consumption of energy.

Noise elimination occurs both at motor start-up and during running at low revolutions.

Also, the self-lubricating bushes enable excellent operation even at winter temperatures.

A person skilled in the art may, in order to satisfy other needs in particular situations, make many further modifications and alterations to the fan motor according to the invention, all such however being included in the scope of protection of the present invention as defined in the appended claims.

## Claims

1. Fan (3) motor (5, 5') for electric convector (1) for air conditioning, comprising at least one drive shaft (7) that carries one or more rotary fans (3) and projects from a hub (6) of the motor (5, 5') and has an approximately horizontal position, characterized in that the drive shaft (7) is hollow.

2. Fan (3) motor (5, 5') according to Claim 1, in which the drive shaft (7) comprises a tube extending from said hub (6).

3. Fan (3) motor (5, 5') according to Claim 1 or 2, in which the fill ratio of the hollow drive shaft (7) is less than 75%.

4. Fan (3) motor (5, 5') according to one of the previous claims, in which the hub (6) comprises at least one bush for supporting the drive shaft (7).

5. Fan (3) motor (5, 5') according to Claim 4, in which said at least one bush is self-lubricating.

6. Electric convector (1) for air conditioning comprising at least one electric motor (5, 5') that possesses at least one hub (6), a drive shaft (7) projecting from said at least one hub (6) and having an approximately horizontal position, and one or more rotary fans (3) mounted on said drive shaft (7) for blowing conditioned air, characterized in that the drive shaft (7) is hollow.

7. Electric convector (1) for air conditioning according to Claim 6, in which the drive shaft (7) comprises a tube extending from said hub (6).

8. Electric convector (1) for air conditioning according to Claim 6 or 7, in which the fill ratio of the hollow drive shaft (7) is less than 75%.

9. Electric convector (1) for air conditioning according to one of Claims 6 to 8, in which said at least one hub (6) comprises at least one bush for supporting the drive shaft (7).

10. Electric convector (1) for air conditioning according to Claim 9, in which said at least one bush is self-lubricating.
